# EUROPÄISCHE PATENTSCHRIFT

(11) **EP 0 990 213 B1**
(45) Veröffentlichungstag und Bekanntmachung des Hinweises auf die Patenterteilung: **09.04.2003**
(21) Anmeldenummer: 98936168.8
(22) Anmeldetag: 10.06.1998
(51) Int. Cl.: G06F 17/30

(54) **VERFAHREN EINES DEDUKTIVEN KATALOGES ZUR ALLGEMEINEN CONSTRAINTSBEHANDLUNG IM ERWEITERTEN RELATIONALEN DATENBANKKONZEPT**
DEDUCTIVE CATALOG METHOD FOR GENERAL CONSTRAINT TREATMENT IN AN EXTENDED RELATIONAL DATA BASE CONCEPT
PROCEDE RELATIF A UN CATALOGUE DEDUCTIF POUR LE TRAITEMENT DE CONTRAINTE GENERAL DANS LE CONCEPT D'UNE BANQUE DE DONNEES RELATIONNEL ELARGI

(30) Priorität: 19.06.1997 DE 19725965
(43) Veröffentlichungstag der Anmeldung: 05.04.2000
(73) Patentinhaber: Güse, Klaus, 30171 Hannover (DE); Zakaria, Edgar, 30455 Hannover (DE); Buhr, Thomas, 30989 Gehrden (DE); Abdelwahab, Naser, 30175 Hannover (DE); Daghbouche, Karim, 30175 Hannover (DE)
(72) Erfinder: ABDELWAHAB, Naser, c/o DAGHBOUCHE,Karim, D-30175 Hannover (DE); DAGHBOUCHE, Karim, D-30171 Hannover (DE)
(86) Internationale Anmeldenummer: DE9801622
(87) Internationale Veröffentlichungsnummer: WO98059304

(56) Entgegenhaltungen:
- MENGCHI LIU: "HLO: a higher-order deductive object-oriented database language" INFORMATICA, SEPT. 1995, SLOVENIA, Bd. 19, Nr. 3, Seiten 319-331, XP002078835 ISSN 0350-5596
- MENGCHI LIU ET AL: "Declarative updates in deductive object-oriented databases" MICROCOMPUTER APPLICATIONS, 1996, ISMM, USA, Bd. 15, Nr. 3, Seiten 127-132, XP002078836 ISSN 0820-0750
- NG R T ET AL: "A semantical framework for supporting subjective and conditional probabilities in deductive databases" LOGIC PROGRAMMING. PROCEEDINGS OF THE EIGHTH INTERNATIONAL CONFERENCE, PARIS, FRANCE, 24-28 JUNE 1991, Seiten 565-580, XP002078837 ISBN 0-262-56058-5, 1991, Cambridge, MA, USA, MIT Press, USA

## Beschreibung

### Anwendungsgebiet der Erfindung

Die Erfindung betrifft Verfahren eines deduktiven Kataloges zur allgemeinen Constraintsbehandlung im erweiterten relationalen Datenbankkonzept. Die Erfindung führt in Abhängigkeit eines neuen logischen Vervollständigungsverfahrens zu Abfrageprozeduren im Rahmen deduktiver Datenbanken, welche nicht mehr von der Komplexität der logischen Form abhängen, sondern von der auf der Metaebene des Kataloges im Voraus zur Verfügung gestellten logischen Theorie.

Damit dient die Erfindung der Verbesserung der Abfrageprozedur im allgemeinen. und der Effizienzsteigerung im speziellen, da die Antwortsprozeduren einer relationalen Datenbankabfrage, insbesondere bei feldübergreifenden Constraints, eine Geschwindigkeitszunahme erfahren.

### Charakteristik des bekannten Standes der Technik

Bekannt sind allgemeine Verfahren zur Behandlung der Constrainstprogrammierung im Rahmen kontinuierlicher oder diskreter Variablen zur Modellierung mathematischer oder algorithmischer Probleme (vgl. DE4411514 A1 951005 und US005216593).

Nachteilig ist, daß diese Verfahren sich nicht für allgemeine Datenbankkonzepte eignen.

Bekannt sind Verfahren, bei welchen die am wichtigsten erscheinenden referentiellen Integritätsbedingungen bei der Erstellung eines SQL-Ausführungsplanes im Voraus bestimmt werden (vgl. US005386557). Nachteilig ist, daß damit anwendungsbezogen keine benutzerdefinierten Constraints mehr möglich sind. Um dieses zu Gewährleisten, wird bei (US005488722) offengelegt, eine benutzerdefinierte Constraintsmethode für Datenbanken von der Wahrscheinlichkeit eines Konsistenzbruches abhängig zu machen. Danach werden diejenigen Constraints, welche wahrscheinlich nicht eingehalten werden, zuerst angewandt.

Nachteilig ist, daß dieses Verfahren nicht allgemein anwendbar ist, da die Erstellung einer entsprechenden Ordnungshierarchie zur Anwendungspriorität einer Constraintsanwendung das Ergebnis einer Datenbankabfrage voraussetzt, so daß auch bei Rekursion von Datenbankabfragen immer Constraints existieren, welche über keine Rangordnung verfügen.

Somit besitzen sie zur Anwendung keinen Wahrscheinlichkeitswert.

Zur Effizienzsteigerung der Abfrageprozeduren sind Verfahren bekannt, bei welchen innerhalb eines logischen Programms verschiedenen Prädikaten ein bestimmter Ordnungsrang zugewiesen wird (vgl. EP 92118885 921104). Dabei wird die Zuordnung der logischen Prädikate auf Ebene des Begriffssystems berührt, nicht aber das logische Vervollständigungsverfahren (SLD-Resolution).

Bekannt sind Verfahren um Bedingungen für große Mengen von Daten einer Datenbank zu überprüfen (vgl. EP 96300875 960209; Hirao, T.: Extension of the relational database semantic processing model, in: IBM Systems Journal, Vol. 29, No. 4, 1990, S.539 bis 550, und Lippert, K.: Heterogene Kooperation, in: ix Multiuser Multitasking Magazin 7/1994, S. 140 bis 147). Die darin angegebenen Verfahren sind prozedural angelegt, und entbehren damit die logisch-deklarative Form.

Nicht bekannt sind Verfahren, bei welchen allgemeine Constraintsbehandlungen im erweiterten relationalen Datenbankkonzepten derartig durchgeführt werden, daß logische Vervollständigkeitsverfahren auf Katalogebene angewandt werden, um damit eine Effizienzsteigerung der Ausführgeschwindigkeit von logischen Abfragen zu gestatten:

### Das relationale Datenmodell

### (vgl. Date; An introduction to database systems, Vol. I, Fourth Edition, Adison-Wesley, Massachusetts, 1986)

Das relationale Datenbank-Modell entstammt einer vereinfachten Form der Prädikatenlogik erster Ordnung. Die Begriffe: Beziehung (Relation), Domain. Attribut und Interpretation haben die dort üblichen Bedeutungen.

Die einzigen Objekte dieses Systems sind Tupel. Ein Tupel ist eine Sammlung von Attributen, die intensional-logischen Zwecke dienen.

Die Tupel werden in Tabellen zusammengefaßt. Die Tabellen beteiligen sich durch Tupel in verschiedenen Datenbankoperationen, welche Schemakonsistenz garantieren. Bezogen auf ihre Rolle in der Schemakonsistenz, werden die Tabellen in Grund- bzw. auxiliären Tabellen unterteilt.

Das RDS ist ein logisches Bild einer mit anderen Mitteln zu gewinnenden semantischen Darstellung der zu modellierenden Miniwelt. Von diesen Mitteln ist das ER-Diagramm am bekanntesten. Es liefert ein Schema, das die Basiskonsistenzbedingungen der Miniwelt enthält. Darunter versteht man die wichtigsten in der Miniwelt existierenden Beziehungen zwischen Objekten, welche z.T. durch Kardinalitätsklassen zu behandeln sind.

Schlüsselattribute haben eine zentrale Bedeutung als Garant der Schemakonsistenz. Sie gewähren die referentielle Integrität und bewerkstelligen damit, daß die Datenbankrelationen Normalformen genügen. Mit referentieller Integrität ist das Vorhandensein von Attributwerten in Grundtabellen gemeint, wenn diese Werte in auxiliären existieren und umgekehrt.

Die Schnittstellensprache SQL, mit der man an das RDS Anfragen stellen kann, ist eine Logik-basierte Sprache, die es zwar erlaubt die Abfrage deklarativ zu beschreiben, aber nicht in der Lage ist, die volle Funktionalität einer Programmiersprache wiederzugeben. Es fehlt die Rekursion.

Durch Rekursion modellierbare allgemein-logische Konsistenzbedingungen (wie die Kalkulation der transitiven Hüllen von Relationen z.B.) werden vom RDS nicht unterstützt und bedürfen der externen Programmierungsarbeit. Einige Ansätze dieser Programmierung sind prozedural und haben den Nachteil der Komplexität und der Unübersichtlichkeit, andere sind deklarativ und haben den Nachteil der Ineffizienz und der Beschränktheit auf bestimmten Modellierungssituationen.

Da das RD-Modell aus der Prädikatenlogik entstammt, verfügt es -in einer beschränkten Weise- über die in der Logik übliche Aufteilung eines Systems in Ebenen bzw. Metaebenen. Das RD kennt davon nur zwei: Die untere enthält die Daten in Form von Tupeln. Die obere hingegen verfügt über alle für die Implementierung des Systems wichtigen Informationen über Beziehungen und andere absuakte Datentypen. Die in der Literatur übliche Bezeichnung dieser letzteren Ebene lautet: **Katalog**.

Wenn ein Katalog mit Detailinformationen über andere Aspekte der Anwendung wie z.B. organisationsspezifische Merkmale, die mit der Realisierung der Operationen eines RDS nichts zu tun haben, verfügt, so spricht man von einem Data Dictionary.

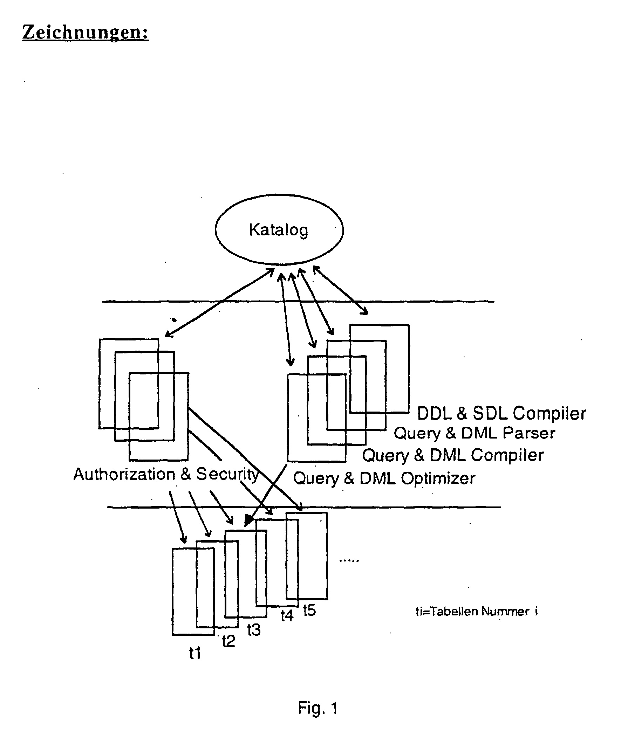

Ein reales RDS enthält die in Fig. 1 aufgeführten Komponenten. Tj (j=1..n) steht für Tabellennamen. Die Pfeile symbolisieren den Datentransfer.

Der Katalog wird u.a. benutzt, um die Spezifikationen eines Datenbankschemas abzuspeichern (DDL-compiler) und die Ausdrücke einer Abfrage gegebenenfalls mit diesen Daten zu vergleichen (DML-parser). Gleichzeitig wird beim Kompilieren (DML-Compiler) auf reale Dateiorganisationsinformationen mit dem Ziel zugegriffen, Maschinencodes zu generieren. Abfrageoptimierungen (DML-Optimizer) benutzen Feldbeschreibungen, um z.B. Indexe und Hashfunktionen bei dem Entwurf eines Ausführungsplanes zu berücksichtigen.

Dazu werden auch heuristische Optimierungskriterien wie Selektivitätsabschätzungen (selectivity-estimates) benötigt und im Katalog abgelegt. Andere Funktionen eines Kataloges bestehen darin. Sicherheitsstufen zu definieren und die Übersetzung der Datenbankviews in das originale Schema zu garantieren.

### Constraintsbehandlung

Abgesehen von der oben erwähnten Schlüsselintegrität, existiert in einem RDS die Möglichkeit, auch explizite Konsistenzkriterien in Form von Programmeinträgen im Katalog zu definieren. Dies hat gewöhnlich die Form einer SQL-Klausel, die mit eingebauten Konsistenzverifikationskomponenten versehen ist. Beispielsweise erreicht die Befehlssequenz 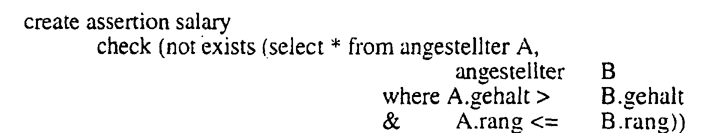 eine Beschränkung der Tupel der Datenbasis auf diejenigen, bei denen das Gehalt eines Angestellten niemals das seines ranghöheren übertrifft. Das Anbinden der Constraintsdefinition an SQL hat den Nachteil der Übernahme mangelnder Ausdruckskraft.

Das oben erwähnte Fehlen der Rekursion macht es unmöglich, transitive Abhängigkeiten z.B. in einem Constraint zu berücksichtigen.

Im Beispiel wurde angenommen, daß die Ordnung der Tupel unter Berücksichtigung des Aspekts "Rang" bereits existiert. Ein explizit aufgeführtes Attribut (Rang) realisierte diese Ordnung. Im Falle des Fehlens einer solchen Ordnung, die streng sein muß. würde diese Art von Konsistenzüberwachung nicht möglich sein. Wenn eine Datenmenge quantitativ so groß ist, daß z.B. eine manuelle Eingabe der Werte aus pragmatischer Sicht unrealistisch wird, dann tritt ein solcher Fall auf. Externe Programmierungsmaßnahmen, welche die Tupelbeziehung(en) rekursiv oder iterativ bearbeiten, wären diesbezüglich die einzige Lösung.

Der Katalog enthält aber nicht nur die Beschreibung der Constraints, sondern auch ihre Realisierungsinformation. In der Praxis einer heutigen RD-Umgebung hat man drei mögliche Realisierungsstrategien : Transaktionsprozeduren, Zusicherungen und Trigger.

Mit Transaktion ist gemeint:
*Man faßt eine Menge von Basisoperationen in Form einer Prozedur zusammen, und betrachtet diese als eine eigene Konsistenzeinheit.* Damit garantiert das System die Unteilbarkeit dieser Einheit. Zusicherungen sind hingegen *logische Prädikate, die auf Datenbasiszustände angewandt werden, um die Konsistenzbedingungen zu erfüllen.* Schließlich sind Trigger *automatisch ausgelöste Prozeduren, die als Folgeoperationen zusammen eine Konsistenzeinheit bilden können.*

### Ansätze zur Constraintsbehandlung

Wenn große Quantitäten von Daten in eine Datenbank importiert werden müssen, dann entsteht das Problem, die Constraintmenge möglichst effizient zu aktivieren.

Dabei ist vor allem das Erhalten der referentiellen Integrität das aufwendigste Vorhaben, da die Insert- bzw. Delete-Anweisungen diese Integrität verletzen könnten. SQL verfügt über die CASCADE-Funktion, mit dessen Hilfe alle "Waisentupel", d.h. alle mit Fremdschlüssel versehenen Tupel von auxiliären Tabellen, die keine in den Grundtabellen vorkommenden Schlüsselwerte besitzen, beseitigt werden können. Um lange zeitliche Verzögerungen zu vermeiden, muß die CASCADE-Funktion jedoch möglichst prägnant mit den im letzten Absatz erwähnten Konsistenzerhaltungsstrategien kombiniert werden.

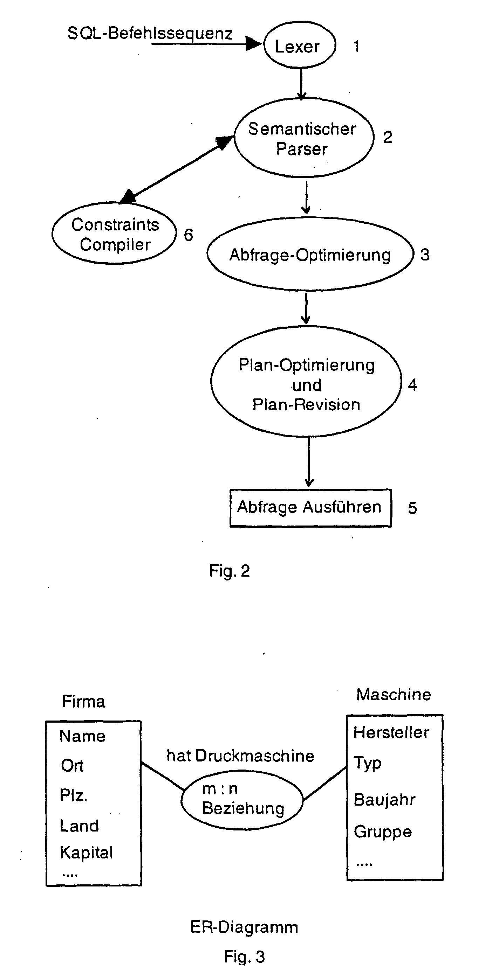

Fig. 2 zeigt den üblichen Befehlsfluß, wenn eine SQL-Anweisung bearbeitet wird.

Nach der syntaktischen und semantischen Bearbeitung in (1) und (2), wird eine Optimierung eingeführt. Die Grundidee ist, daß möglichst viele SQL-Befehlsvorkommen eliminiert (vgl. Query Graph Model und IBM Research-Report RJ-6367, IBM Almada,

San Jose, CA., August 1988). Die Planoptimierung (4) ergänzt dieses Verfahren, indem reale Dateiorganisationsparameter benutzt werden, um die bestmögliche Realisierung zu garantieren. Im Falle der Existenz von Constraints wird durch den Constraintscompiler (6) ein Maschinencode generiert, der die Constraintsbeschreibung darstellt. Das hier vorgestellte Verfahren wird diesen in Fig. 2 dargestellten Befehlsfluß heuristisch neu gestalten.

Einige Ansätze zur Realisierung von effizienten Constraint-Checks (vgl. EP 96300875 960209) ersetzen den normalen SQL-Compiler, der im Falle eines INSERT-Commandos aktiviert wird, durch einen anderen. Dessen Funktion ist es, vor der INSERT-Maschinencodesequenz eine SELECT-Anweisung zu generieren. Diese entfernt alle Tupel aus der Datenbank, die die Constraints verletzen, bevor ein neuer Tupel angefügt werden kann. Damit garantiert er die referentielle Integrität. Demgegenüber ersetzt das nachstehend neue Verfahren den Constraintscompiler durch einen unten vorgestellten Constraints-Abfrage-Generator. Dieser hat die Aufgabe, Constraintchecks in Form von prädikativen Anfragen an dem Katalog zu stellen.

### Deduktive Datenbanken

Die Problematik der Constraintsbehandlung kann in ihrer notwendigen Allgemeinheit nur im Rahmen der logischen Programmierung untersucht werden. Dabei spielt es keine Rolle, ob die Constraints allgemeine oder referentielle Integrität modellieren, da die referentielle Integrität eine spezielle Art von Variablenbindungsproblemen darstellt, wie sie in der logischen Programmierung üblich ist.

Auf dem Gebiet von Datenbanken benutzt man deduktive Datenbanken immer dann, wenn Lösungsansätze angestrebt werden. die gleichzeitig deklarativ und mathematisch-logisch vollständig sein sollen. Die übliche deduktive Datenbanksprache ist DATALOG.

Sie ist eine beschränkte prädikative Sprache ohne Funktionen und ohne Negation. DATALOG entspricht den wesentlichen Bedürfnissen einer Datenbank, weil sie das logische Bild des RD-Modells darstellt. Im RDS werden -wie oben erwähnt- auf Tupelebene keine komplexen Datenstrukturen benötigt, welche mit Funktionen vergleichbar wären. Zudem wird die Semantik der Negation als Scheitern betrachtet, die gewünschten Tupel in der geschlossenen und endlichen Welt der Datenbank zu finden (engl.: Negation as Failure, Closed World Assumption).

Um den Rahmen der hier beschriebenen Erfindung streng einzugrenzen, wird im folgenden der DATALOG-Formalismus mathematisch-logisch ausgeführt.

Formale Definitionen sind mit dem Index Def. versehen, wogegen allgemein-sprachliche Vereinbarungen mit Ver. gekennzeichnet sind:

### Ver. 1: Eine intensionale Datenbasis (IDB) ist die Menge aller Tupel aus einer Datenbank, die mittels Regeln der Logik aus einer vorgegebenen (extensionalen) Menge (EDB) ableitbar sind.

### Ver. 2: Die Regeldefinitionssprache ist eine Sprache. mit welcher man die ableitbaren Beziehungen der IDB bestimmen kann.

Diese Sprache erlaubt es dem Programmierer, logische Verknüpfungen zwischen den verschiedenen Sachverhalten in der Datenbasis zu definieren. Im allgemeinen werden von ihr folgende Eigenschaften vorausgesetzt:
A. Rekursive Definitionen, d.h. Regeln können selbstbezogen sein.
B. Negation, d.h., daß die Möglichkeit ein nicht existierendes Faktum in der logischen Verknüpfung zu berücksichtigen gewährleistet ist.
C. Beliebige benutzerdefinierte Funktionen sind gestattet.

Sie ist folglich eine weitreichend reduzierte Version der Horn-Klausel-Sprache von PROLOG (vgl. Chang, C.L.; Lee. R.C.: Symbolic logic and mechanical theorem proving, Academic Press, 1977 Edition, 1973 und Sterling, Leon; Ehud, Shapiro. The Art of Prolog, MIT Press series in logic programming, 1986).
*Def. 1: Literale sind negative oder positive logische Aussagen.*
*Def. 2: Horn-Klauseln sind Regeln der Form: Q* ← *A*1 ∧ *A*2...∧*An*. *wo Q und Ai nicht-negative Literale sind.*
*Def. 3: Eine Regel der Form* Q ← *A*1 ∧ *A*2...∧*An wird definit genannt. wenn Q und Ai Atome sind (für alle Ai).*

Eine der bekanntesten Regeldefinitionssprachen ist DATALOG (vgl. Ullman, Jeffery D., Principles of database & knowledge-base systems, Volume I&II, Computer science press, 1988). DATALOG ist eine Sprache ohne Funktionssymbole, welche jedoch über verschiedene Extensionen (z.B. DATALOG^{fun}, DATALOG^{neg}) verfügt, die teilweise Funktionsdefinitionen erlauben. Die Syntax von DATALOG enthält folgende Elemente :

| | | |
|---|---|---|
| A. | Konstanten | a,b,c,d.... |
| B. | Variablen | x,y,z,.... |
| C. | Relationale Prädikate | R1,R2 ... |
| D. | Logische Verknüpfungen | ∨,∧,← |
| E. | Gleichheitsprädikate | =,<,>.... |
| F. | Punktuations- und Trennsymbole | ,,,","." |

Formeln und Regeln werden rekursiv mit Symbolen aus A bis F definiert.
*Def. 4: Ein Tenn ist entweder eine Konstante oder eine Variable.*
*Def. 5: Ein Atom ist ein Ausdruck der Form P(t1,t2*,....*tn). wo P n-äres Prädikat ist und ti Terme. Die Menge aller Atome wird A geschrieben.*
*Def. 6: Ein Grundterm(Atom) ist ein Term (Atom) ohne Variablen.*

In einer Regel *Q ← A*1 ∧ *A*2...∧*An*, wird Q Konklusion (Kopf) und A Prämisse genannt.

Jedes Ai ist Teilziel und die gesamte Konjunktion ist ein Ziel (Rumpf).
*Def. 7: Eine DATALOG-Regel enthält nur Atome. Sie wird rekursiv genannt, wenn die Konklusion auch als Prämisse in der Regel enthalten ist. Sie wird darüber hinaus linear rekursiv genannt, wenn die Konklusion nur einmal unter den Prämissen vorkommt.*
*Def. 8: Eine DATALOG-Regel der Form Q ←*., *wo Q Grundatom ist, wird Faktum genannt.*
Beispiele von DATALOG-Regeln sind
*Vorfahren*(*x,y*) *← Eltern*(*x,z*) *∧ Vorfahren*(*z,y*), oder
*Vorfahren*(*x,y*) *← Vorfahren*(*x,z*) *∧ Vorfahren*(*z*,*y*). Die erste ist linear und die zweite nicht-linear rekursiv.
*Def*. *9: Ein DATALOG-Programm ist eine Menge von DATALOG-Regeln.*

Die Semantik von DATALOG-Programmen kann entweder deklarativ (modell-basiert) oder prozedural (beweis-basiert) sein. Im folgenden wird die modellbasierte Variante beschrieben.
*Def*. *10: Eine Interpretation I einer DATALOG-Formel ist ein Tupel (D,PA,CA), in dem D ein Datendomain, CA eine Abbildung von Konstanten auf Elemente des Domains und PA eine Abbildung von n-ären Prädikaten (D* ^{*n*}*) auf die Menge {true, false} ist.*
*Def. 11: Eine Variablenauswertung Π(in einer bestimmten Interpretation) ist eine Abbildung, die jeder Variablen in einer DATALOG-Formel ein Element aus dem Domain D zuschreibt.*

Eine bestimmte Interpretation und eine bestimmte Variablenauswertung definieren daher den Wahrheitswert einer DATALOG-Formel eindeutig.
*Def. 12: Ein Modell eines DATALOG-Programms ist eine Interpretation, in der alle Regeln und Fakten den Wahrheitswert "True" haben. Dies bedeutet:*
*1) Für alle Tupel (tl*....*tn), die in der Relation P vorkommen, ist P(tl....tn) "True".*
*2) Für alle Regeln und alle Variablenauswertungen Π gilt, daß wo immer* π(*A*1∧...*An*) *"True" ist (die Ai's sind sämtliche Prämissen einer Regel), die Konklusion auch den Wahrheitswert "True" besitzen.*

Ein Modell ist also eine Menge von Prädikatinstanzen, *die alle Tupeln der intensionalen Datenbasis IDB enthält.*

Da es mehrere Modelle eines DATALOG-Programmes geben kann, spricht man von der Semantik und meint das minimale Modell. In (Van Emden, Kowalski, The semantics of predicate logic programming languages, Journal of the ACM, Oktober 1976) wurde bewiesen, daß es für DATALOG-Programmkonstrukte ein solches Modell gibt.

Man gelangt zu folgender Definition:
*Def. 13: Die kanonische, deklarative Semantik eines DATALOG-Programmns ist nur und ausschließlich die Menge aller Prädikatinstanzen. die aus dem Programm abgeleitet werden können. Diese Menge wird minimales Modell genannt.*

Diese Definition impliziert eine Modellgenerationsprozedur. Man nimmt die Fakten der Datenbasis als Anfangspunkt und wendet eine Regeln nach der anderen solange an, bis keine neuen Fakten mehr generiert werden. Diese Prozedur wird naive Vervollständigung genannt. welche erfindungsgemäß zentraler Punkt des neuen Verfahrens ist.

### Die logische Vervollständigung

Die in einem logischen System vorkommenden Regelmengen müssen Korrektheits- und Vollständigkeitskriterien genügen. Im Kontext dieser Erfindung wird mit "vollständig" bezeichnet, daß die Axiome und Deduktionsregeln alles deduzierbare auch explizit ableiten.

Das erreicht man am leichtesten mit Hilfe von sogenannten Vervollständigungsprozeduren:

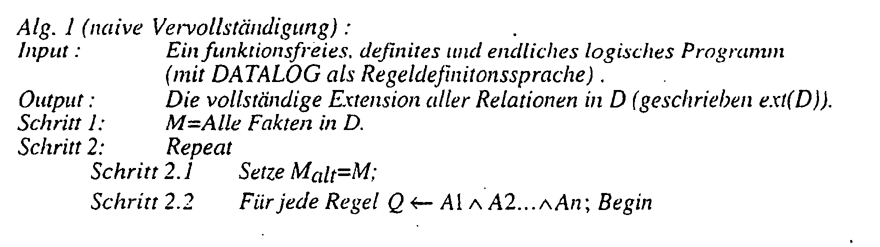

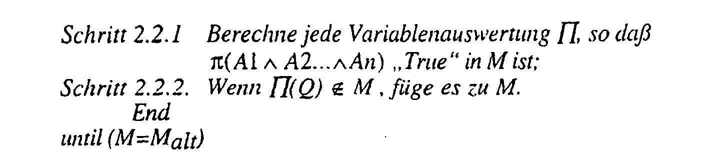

Zwei wesentliche Schwachpunkte dieses Verfahrens sind die unkontrollierte Wiederholung von Deduktionsschritten und die Generation von Extensionen aller Relationen. Was die Komplexität betrifft ist klar, daß man bezogen auf die Länge der Formeln, mit einem exponentiellen Aufwand bei der Generierung rechnen muß.
*Def. 14: Eine Prämisse Ai einer Regel Q ← A*1 ∧ *A*2...∧*An wird als Muster bezeichnet, wenn es mindestens ein Faktum F und eine Variablenauswertung Π in der Datenbasis gibt, so daß F=Π(Ai) (man sagt: Ai unifiziert F).*
*Proposition 1: Angenommen jedes Muster M einer durchschnittlichen Regel Q* ***←*** *A*1 ∧ *A*2...*∧An unifiziert m Fakten von ext(D) (im Durchschnitt), dann ist der Aufwand von Alg. 1 im schlechtesten Falle O(m*^{*n*}*).*
*Beweis:*
*Die Berechnung aller Variablenauswertungen Π in Schritt 2.2.1. benötigt einen Algorithmus, welcher die Schnittmenge der Ais ( in A*1 ∧ *A*2...∧*An) bildet. Der Aufwand dieses Algorithmus - angenommen die Mengen sind nicht sortiert- ist c1 *m*^{*n*}*, wo c1 eine Konstante ist. Im Falle einer geeigneten Sortierung wäre der Aufwand c2 *n *m *log(m), wobei c2 > c1. Dies ist aber in Alg. 1 nicht der Fall, da man keine Ordnung der Fakten voraussetzt.*

Schritt 2.2.1. ist nicht der einzige Schritt, der einen Engpaß bildet. Der Suchvorgang in Schritt 2.2.2. ist sehr aufwendig, wenn keine Sortierordnung existiert. Im iterativen Prozeß wird das neue Faktum erst dann in die Datenbasis eingefügt, wenn man die ganze Datenbasis nach ihm durchsucht hat. Angenommen der Prozeß generiert k neue Fakten und t Fakten existieren bereits in der Datenbasis, dann sind im Durchschnitt k*t Vergleiche notwendig. Wenn aber k sehr groß wird (das zehnfache von t z.B.), dann ist mit der langen Kette *t* + [1/*a*₀]**k***t*+[1/*a*₁]**k***t*+...+*k***t* zu rechnen, wobei die Koeffizienten a0,a1... usw. von der logischen Form abhängen. Diese entscheidet in welchen iterativen Schritten welche "Portion" von k gebildet wird.

Trotz diesen Schwierigkeiten bleibt Alg. 1 eine sichere Methode um das minimale Modell eines DATALOG-Programms zu generieren. Dies aufgrund folgender Eigenschaft:
*Proposition 2: Alg. 1 terminiert -bei korrektem Input- immer.*

Für den Beweis benötigt man einige Definitionen und eine Proposition.
*Def*. *15: Das Herbrand-Universum eines logischen Programmes U*_{*p*} *ist die Menge aller Grundterme, die aus den Konstanten und Funktionssymbolen in P erstellt werden können.*
*Def*. *16: Die Herbrand-Basis eines logischen Programmes B*_{*p*} *ist die Menge aller Grundatome, die aus den Prädikatsymbolen von P und der Grundterme in U*_{*p*} *erstellt werden können.*
*Def. 17. Eine Herbrand-Interpretation eines logischen Programmes ist irgendeine Teilmenge von B*_{*p*}*.*
*Def. 18: Eine Herbrand-Interpretation I ist Herbrand-Modell eines definiten logischen Programmes P, gdw. alle definiten Klauseln in P den Wert "True" haben. Eine definite Klausel hat den Wert "True", wenn mindestens eine atomare Pränisse "False " oder die Konklusion "True "ist. Ein Atom A hat den Wert "True" in I. wenn A ∈ I und andernfalls "False".*

Das Herbranduniversum eines Programmes P, das nur die Konstante {0} und die Funktion {s} enthält, ist {0,s(0),s(s(0)),s(s(s(0)))....}. Angenommen es enthält auch ein Prädikatensymbol ,,>,, , dann ist die Herbrandbasis {>(s(0),0),>(s(s(0)),s(0)),>(s(s(s(0))),s(s(0)))...}.

Im Beispiel sind Up und Bp unendlich, da man durch s beliebig lange Terme bilden kann. Wenn man aber keine Funktionssymbole zuläßt, dann sind Uₚ und Bₚ endlich.

Dies ist der zentrale Gedanke der folgenden Proposition:
*Proposition 3 : Die Herbrandbasis eines definiten, funktionsfreien und endlichen logischen Programmes P, ist endlich.*
*Beweis*
*Aus der Endlichkeit und der Funktionsfreiheit von P folgt unmittelbar die Endlichkeit des Herbranduniversums. Darüber hinaus ist die Prädikatenmenge von P endlich. Daraus folgt, daß B*_{*p*} *endlich ist.*
*Beweis von Proposition 2*
*Falls Alg. 1 bei einem korrekten Input nicht terminiert. dann gibt es unendliche Ketten von Grundatomen, die entweder unendlich neue histanzen von Grundtermen des Herbranduniversums, oder bereits immer wieder generierte Atome aus Bp enthalten.*

*Erstere Möglichkeit ist ausgeschlossen, da B*_{*p*} *und U*_{*p*} *endlich sind. Die zweite Möglichkeit tritt nicht auf. da Schritt 2.2.2. garantiert, daß nur neugenerierte Atome zur Datenbasis ergänzt werden.*

### Alternative Vervollständigungsverfahren

In (Bancilhon, F.; Maier, D.: Sagiv, Y.; Ullman, J.D.: Magic sets and other strange ways to implement logic programs. Proc. ACM SIGMOD-SIGACT Symp. of principles of database systems, Cambridge (MA), 1986), (Bayer, R.: Query Evaluation and Recursion in Deductive Database Systems, Manuscript, March 1985) oder (Lozinskii: Evaluation queries in deductive databases by generating, Proc. Int. Joint Conference on A.1., 1985) existieren verschiedene alternative Verfahren zur naiven Vervollständigung.

Diese betreffen entweder den Inferenzprozess selber, d.h. die Art mit der man die Regeln anwendet, oder die für die Anfrage relevanten Fakten der Datenbasis. Eine Methode, welche sich mit dem Inferenzprozess selber befaßt, ist die sogenannte semi-naivc Vervollständigung (vgl. Bancilhon, F.; Ramakrishnan, R.: An amateur's introduction to recursive query processing, Proc. of the ACM SIGMOD-SIGACT Conference. Washington D.C., May 1986).

Diese versucht die unnötige Wiederholung von Generationsschritten (Schritt 2.2.1. in

Alg. 2) zu vermeiden, indem sie nur die inkremental-generierten Fakten, d.h. die Fakten, die in der letzten Iteration entstanden sind, berücksichtigt (vgl. Chang, C.L.; Gallaire, H.; Minker, J.; Nicholas, M.: On the evaluation of Queries containing derived relations in rclational databases, Advances in database theory, Vol. I, 1981, oder Marq-Puchen: Gallausiaux, M.; Jomien: Interfacing Prolog and Relational Database Management Systems, New applications of databases, Gardavin and Gelaube eds. Academic Press, London, 1984).

Die Annahme ist, daß Δ*R*_{*i*} = (*R*_{*i*}*∪F(R*_{*i-*}₁ ∪ Δ*R*_{*i*} _{- 1})) - *R*_{*i*} für jede Relation Rᵢ (Δ*R*_{*i*} ist hier die inkrementale Änderung von Ri und F(Ri) der funktionale Ausdruck, den man aus dem Rumpf einer Regel deduziert). Im allgemeinen kann man Δ*R*_{*i*} nicht einfach als Funktion von Δ*R*_{*i*} _{- 1} berechnen. Im Falle von linear-rekursiven Regeln ist das aber möglich, weil *F*(*R*_{*i*} ₋₁∪Δ*R*_{*i*} _{- 1}) = *F*(*R*_{*i*} _{- 1})∪*F*(Δ*R*_{*i*} _{- 1}) = *R*_{*i*}∪*F*(Δ*R*_{*i*} _{- 1}).

Solange man davon ausgehen kann, daß die Regeln linear-rekursiv sind, ist die semi-naive Vervollständigung eine effizientere Alternative zu Alg. 1. Wenn man aber die Flexibilität erweitert und nicht-lineare Rekursionen erlaubt, ist diese Methode nicht mehr günstig (die frühen Realisierungen von semi-naiven Ansätzen sind für diese Art von Rekursion nicht gültig).

Desweiteren wird der exponentielle Aufwand nur durch die Reduktion der Anzahl der Fakten des einen für den letzten Deduktionsschritt relevanten Musters gemindert. In einer Verknüpfung *A*₁∧ *A*₂∧...∧*S*∧...*A*_{*n*}, wo S diesem Muster entspricht, werden zwar jeweils die Fakten, die S unifizieren, in Betracht genommen, Verknüpfungen zwischen den Aᵢ's müssen jedoch immer wieder hergestellt werden. Man hat gesehen (Proposition 1), daß die Erstellung der UND-Verknüpfungen den aufwendigste Schritt in der Vervollständigungsprozedur ausmacht.

Die sogenannte APEX-Prozedur [Lozinskii 1985] ist ein Verfahren der zweiten Art. Es werden zuerst die für eine definite Abfrageklausel W? (Ziel) relevanten Fakten einer Datenbasis generiert, um erst dann den Vervollständigungsprozeß zu beginnen.

Die relevanten Fakten werden mit Hilfe von sogenannten Regelsystemgraphen berechnet. Diese beinhalten alle logischen Verknüpfungen zwischen Regeln der Datenbasis.

Sie werden mit einem Abfragegenerationsprozeß, der im Falle von wichtigen UND-Verknüpfungen weitere Abfragen W1?,W2?....usw. generiert, gekoppelt. Die Generation erfolgt durch Konstantenaustausch (engl.: sideway information passing SIP) zwischen der Abfrage oder die Abfragen und den Fakten der jeweiligen Verknüpfung(en).

Eine weitere Methode dieser Klasse ist QSQ (vgl. Vieille, L.; Recursive axioms in deductive databases: The Query-Subquery approach, Proc. First Int. Conf. on expert database systems, Kerschlag ed., Charlston, 1986). Dort werden die Datenbasisregeln (wie in APEX) für die Generation von neuen Abfragen benutzt. Die relevanten Fakten werden jedoch mit Hilfe eines "backward-chaining" Verfahrens linear und in der Tiefe (engl.: depthfirst) (wie in PROLOG) gesucht. Im Falle von rekursiven Prädikaten, werden die Abfragen mit Hilfe von den bereits gefundenen Fakten durch SIP generiert.

Der wesentliche Unterschied zwischen APEX und QSQ auf der einen Seite und der semi-naiven Vervollständigung auf der anderen Seite ist somit, *daß die Lösung der semi-naiven Vervollständigung das allgemeine und prinzipielle Problem der Inferenz von Grundfakten behandelt, wohingegen die beiden anderen Methoden die üblichen Inferenzmechanismen über die Berücksichtigung der relevanten Fakten nur zu optimieren versuchen.*

Magic-sets (vgl. Beeri, C.; Ramakrishnan; On the power of magic, Proc. sixth ACM SIGMOD-SIGACT Symp. on principles of database systems, San Diego, CA. March 1987) ist eine Modifikation von QSQ, die die Variablenbindungen (engl. adornments) in Form von neuen "magischen" Regeln zu einem Programm anfügt oder an der rechten Seite einer Klausel als Restriktionen anbindet. Beginnend mit der Zielklausel, wird cine Menge neuer Prädikate generiert. Durch SIP gelingt es, diese "adornments" weiterzuleiten. Das Resultat ist eine neue, modifizierte Version des ersten Programmes, welche in manchen Fällen effizienter ist. Beispielsweise wird aus dem Programm:
*anc*(*X,Y*) ← *par*(*X,Y*).
*anc*(*X, Y*) ← *anc*(*X, Z*) ∧ *par*(*Z*, *Y*). und der Abfrage
*q*(*X*) ← *anc*(*a,X*). das neue "magische" Programm:
*magic*(*a*)*.*
*q*(*X*) ← *anc*(*a*, *X*).
*anc*(*X,Y*) *← par*(*X,Y*).
*anc*(*X*, *Y*) ← *magic*(*X*) *∧ anc*(*X,Z*) *∧ par*(*Z*, *Y*).
*magic*(*Z*) *← magic*(*X*) *∧ anc*(*X,Z*).

Das neue magic-Prädikat stellt eine Restriktion der zulässigen Substitutionen dar. Es verbindet die Konstanten des Programmes systematisch miteinander.

### Semantische Betrachtungen zur Bedeutung von Variablen im RD-Modell

Es existieren Datalog-basierte Ansätze zur Constraintsbehandlung.

Das Grundproblem besteht darin, den bei der Anwendung einer Constraintmenge von DATALOG-Regeln entstehenden Aufwand zu reduzieren. Lösungsansätze laufen darauf hinaus. Instanzen dieser Regeln zu generieren, bevor eine adäquate Anwendung der Constraints eingeschaltet wird. Dieser Schritt der "Constraintsspezialisierung" hat eine gewisse Verwandtschaft mit der oben beschriebenen Magic-sets Methode. Er unterscheidet sich dadurch. daß nicht die Abfrage die nötigen Variableninstanzierungen liefert, sondern die Insert-(bzw., Delete) Operation.

Die Tatsache, daß viele Lösungsansätze durch Variableninstanzierungen einen hohen Grad an Effizienz erreichen, fordert eine Grundsatzdiskussion über die Bedeutung einer Variablen in der geschlossen Welt einer deduktiven Datenbank und eines RD-Modells.

Die in der mathematischen Logik (und damit in der logischen Programmierung) übliche Bedeutung einer Variablen läuft darauf hinaus, sie als eine vom Domain der Anwendung gelöste Entität zu betrachten. Damit ist der Zugang einer Variableninstanzierung zum Domain unklar, denn es existieren zur Beschreibung dieser Instanzieiungsverfahren keine expliziten oder impliziten Vorschriften in der Interpretation. Dieser Zugang ist damit der Implementation einer logischen Maschine überlassen, was zu erheblichen Aufwandsproblemen führen kann.

Ein Beispiel solcher Probleme sind die in den üblichen Unifikationsmethoden nötigen Occurchecks. Man verfährt so, daß zur Kontrolle, ob eine Variable einen plausiblen Wert bekommen hat oder nicht, erst nach dem eigentlichen Unifikationsschritt geschieht. Im Falle von Funktionsinstanzierungen ist man daher gezwungen, den Occur-check einzuleiten, indem man die Variablenwerte vergleicht. Dies ist ein exponentielles Verfahren, welches den Aufwand der Unifikation (und damit der Vervollständigung) erheblich verschlechtert.

Die prinzipielle Notwendigkeit vom Occur-check und ähnlicher Verifikationen entfällt, wenn man die Variablen an die Domains bindet.

Damit entsteht jedoch die Notwendigkeit, die für die Variablen relevanten Domaine gründlicher festzulegen, als dies bisher der Fall war. Es genügt nicht mehr ein Domain als bloße Auflistung von Begriffen zu betrachten. Vielmehr muß eine in sich geschlossene Metalogik von Begriffsbeziehungen konstruiert werden. Die Variablen sind nur noch Abstraktionen von Begriffen dieser Ebene.

### Ziel der Erfindung

Die Erfindung hat das Ziel, relationale Datenbanksysteme in ihrem allgemeinsten und vollständigsten Konzept, unter Beibehaltung strengster logischer Bedingungen, in ihren logischen Abfrageverfahren so zu optimieren, daß die Antwortsprozedur eine Effizienzsteigerung in Bezug auf die Geschwindigkeit erfährt.

### Darlegung des Wesens der Erfindung

Der Erfindung liegt die Aufgabe zugrunde, ein Verfahren zu kreieren, das relationale Datenbanksysteme in ihrem allgemeinsten und vollständigsten Konzept in ihren Abfrageverfahren so optimiert, daß die Antwortsprozedur eine Effizienzsteigerung in Bezug auf die Geschwindigkeit erfährt, ohne daß logische Bedingungen aufgegeben werden müßten.

Diese Aufgabe wird mit Verfahrensschritten gelöst, wie sie im Patentanspruch 1 angegeben sind.

Die Erfindung wird anhand der Zeichnungen näher erläutert. Dabei zeigen:
Fig. 1 ein relationales Datenbank system,
Fig. 2 den Befehlsfluß für die Bearbeitung einer SQL-Anweisung,
Fig. 3 eine Druckmaschinen datenbank,
Fig. 4 einen Herbrandinterpretationenverband, für Programm,
Fig. 5 einige Abstraktionen von {p(a,a)} und {p(a,a),p(b,b)},
Fig. 6 einen Teil der Herbrandabstraktionsstruktur für Programm 1, und
Fig. 7 das Verfahren einer SQL-Klauselbearbeitung.

### Ausführungsbeispiel

### Erweiterung des RDS durch das Konzept eines im Katalog befindlichen logisch-vollständigen Begriffssystems

Das Verfahren dieser Erfindung basiert auf der Idee, alle für die terminologische, logische und anwendungsspezifische Kontrolle notwendigen Daten, im Katalog im Voraus zur Verfügung zu stellen. Dadurch wird der oben beschriebenen Constraintsbehandlung effizienter nachgegangen. Konsistenzeigenschaften von Datenbanken (bezüglich Mengen von Constraints), sind ausschließlich logischer Natur, und deshalb Metaprobleme.

Das folgende Beispiel erläutert dieses Verfahren:

Sei eine Druckmaschinendatenbank gegeben. Diese enthält die Tabellen "Maschine" und "Firma", wie in (Fig. 3) ersichtlich ist. Die Tabelle "Maschine" besitzt - unter anderem- die Felder "Maschinentyp" und "Druckgruppe". Diese sind von speziellem Interesse, da ihre Kombination wichtige, in der Druckindustrie bekannte Constraints modelliert. Z.B. kann eine Polar-Maschine nicht zur Gruppe 5-Farben Druckmaschinen gehören, da der Typ ..Polar" Schneidemaschinen darstellt. Ähnlich besitzt eine Heidelberg-Tiegel nie mehr als 2 Farbwerke, so daß die Kombination (Typ ="Tiegel". Gruppe ="3-Farben") auch keinen Sinn macht. Würde man diese Information in Form von allgemeinen DATALOG-Regeln auffassen, so stößt man auf das Problem, solche Regeln faktenbezogen definieren zu müssen, da sie nur sehr schwer Allgemeingültigkeit besitzen. Der übliche formal-logische Weg führt zwangsweise zur nicht-monotonen Logik, und damit zu erheblichen Effizienzbeschränkungen.

Der in dieser Erfindung verfolgte Ansatz besteht darin, zulässige Faktenkombinationen im Voraus bereitzustellen, indem man die Grundterme bzw. Beziehungen des Kataloges logisch vervollständigt. Somit erreicht man:
1. Eine strikte terminologische Kontrolle, d.h. es dürfen in den Feldern keine neuen, für das System unbekannte Werte eingegeben werden.
2. Die Terme stehen untereinander in genau den Beziehungen, die im vollständigen Katalog aufgelistet sind.

Das Problem der Definition einer solchen Metaebene hat somit notwendiger Weise mit dem Problem der Definition eines konsistenten Terminologiesystems zu tun. Dieses basiert noch heute auf Ideen, die seit *Aristoteles* bekannt sind. Er erfand für die Biologie die sogenannte "Aristotelische Hierarchie", in welcher jedes Wort einen "Genus" und "Differentia" besitzt. Der Genus definiert den Typ des Objekts für das man das Wort benutzt, der Different seine speziellen Eigenschaften.

Die Merkmale der aristotelischen Hierarchie bilden die Basis für moderne Ansätze der Formalisierung von Konzeptsubsumtionen. In (Bernauer; Subsumption principles underlying medical concept systems and their formal properties, SCAMC, 1994) wird z.B. eine auf medizinische Terminologiesysteme bezogene Anwendung der relevanten Resultate dargestellt.

Die meisten Bemühungen dieses Gebietes basieren auf Studien von KL-ONE Sprachfamilien (vgl. Woods; Understanding subsumption & taxonomy; A framework for progress, In:

Principles of semantic networks, Morgan Kaufmann Publishers, 1990).

Es werden u.a. folgende Arten von Subsumtionsbeziehungen vorgeschlagen:
1. Spezialisierungssubsumtion: Ein Konzept wird allgemeiner genannt gdw. das Subordinierte eine spezielle Zusatzeigenschaft besitzt, die nicht im Basiskonzept enthalten ist.
2. Verfeinerungssubsumtion: Das Basiskonzept oder eines seiner Kriterien werden im subordinierten verfeinert.
3. Teilsubsumtion: Das subordinierte Konzept ist ein Teil eines Kriteriums im Basiskonzept, das nicht erwähnt wird.

Es ist zu bemerken, daß die Teilsubsumtionshierarchie im allgemeinen besondere Eigenschaften aufweist, die es nicht erlauben, z.B. Transitivität von Beziehungen anzunehmen. Regeln der Form "Die Krankheit eines Teiles vom Organ ist eine Krankheit des Organes" sind z.B. im medizinischen Bereich nicht notwendig gültig.

Das in dieser Erfindung benutzte Verfahren zur Grundstrukturierung einer Metalogik im Katalog, wird in der folgenden Vereinbarung explizit festgehalten:
*Ver. 3*: Der für die terminologische und logische Kontrolle zuständige Katalog eines RDS ist die *Union zweier Snbsumtionshierarchien, welche explizit vorliegen. Die eine ist die generische und die andere ist die Teilkonzepthierarchie. Beide können eine große Anzahl von feineren Hierarchiebeziehungen enthalten. Ein Konzept ist mit einem anderen in einer dieser Hierarchien verbunden, wenn eine der oben erwähnten Subsumtionsbeziehungen gilt.*

Diese Definition ist als verfahrenstechnische Basis für die Konstruktion des angestrebten Kataloges anwendbar.

Die Aufgabe des an den Katalog gebundenen logischen Verfahrens besteht nun darin, diese zwei Hierarchien untereinander redundanzfrei zu halten, und gegebenenfalls im Falle von Änderungen zu aktualisieren. Die Aktualisierung ist logischer Natur, *d.h., daß keine logischen Brüche der Begriffsbeziehungen auftreten, und daß damit die Konsistenz und Vollständigkeit bezüglich des Modells der Miniwelt einer Anwendung garantiert wird.*

### Ableitungsregeln im Metabegriffssystem

Der Unterschied zwischen normalen Ableitungen und Ableitungen innerhalb des vorgeschlagenen Begriffssystems wird dadurch verdeutlicht, daß man im Falle eines Terminologiesystems nicht notwendig auch mit allgemeinen logischen Beziehungen zu tun hat, sondern mit Subsumtionsbeziehungen. Dieser Umstand macht mögliche Beziehungseigenschaften vorhersehbar. *Damit ist es nicht notwendig, allgemeine Ableitungsmethoden (wie z.B. die SLD-Resolution) anzuwenden.*

Alternative Ableitungsmethoden werden z.B. in (Thomason, R.H.; Touretzky, T.S.: Inheritance Theory and Networks with Roles, Morgan Kaufmann Publishers, Editor Sowa, 1991, Horty: A skeptical theory of inheritance in nonmonotonic semantic nets. AAAI-87, Proceedings of the Sixth Nat. Conference on A.I., Volume II, 1987, und Fahlman: NETL, A system for representing and using real-world knowledge, MIT-Press. Cambridge MA. 1979) beschrieben. Grundsätzlich basieren sie auf der Betrachtung von Subsumtionsproblemen als Graphverwaltungsprobleme. Die Ableitung eines neuen Konzeptes ist äquivalent mit der Berechnung des kürzesten Pfades im Graphen der Hierarchien (engl.: inheritance network). Typvereinbarungen und Bedingungen tragen dazu bei, den Unterschied zwischen den verschiedenen Verknüpfungen (engl.: links) festzulegen.

Beispielsweise werden bei einem isa-link auf der rechten Seite nur Wörter zugelassen, die von einem vorher vereinbarten Typ sind. Alle Konstruktionen, in denen diese Bedingung nicht erfüllt ist, werden als illegal betrachtet.

Damit ähnelt die Semantik dieser Netze der Semantik einer funktionalen

Programmiersprache. Die Ausdrucksfähigkeit der Prädikatenlogik wird aufgegeben, um effiziente Ableitungsverfahren zu gewährleisten. In [Fahlman 1979] wird angenommen, daß die transitive Hülle der isa-Beziehung der einzig aufwendige Operator ist.

Diesen Richtlinien folgend, definiert die hier beschriebene Erfindung ein neues Verfahren zur Bildung einer semantischen Struktur, welche die klassische Herbrandinterpretation ersetzt. Die obigen Überlegungen suggerieren das Einführen der Variablen als ein zum Domain gehörendes Objekt. Es wird unten gezeigt, daß dies die mathematisch-logischen Eigenschaften der modell-basierten Semantik nicht stört.

Der zweite Unterschied zwischen normalen Ableitungen und Ableitungen in der Katalogmetaebene besteht darin, daß eine Ableitung *nicht immer streng zu folgen ist.*

Allgemeine Regeln finden häufig nur wenig Anwendung.

Das klassische Beispiel ist die Klassifikation von Pinguinen in der Vögelhierarchie. Diese bringt das Problem der Anwendung der Regel "alle Vögel können fliegen" mit sich. Die einzig intuitive Lösung wäre, diese Regel für den Fall der Pinguine auszusetzen. Es stellt sich die Frage, ob diese Spezialisierung nicht wiederum spezialisiert werden muß (z.B. im Falle eines intelligenten Pinguins in einem Science-Fiction-Film). In den nächsten Abschnitten wird man sehen, daß die hier beschriebene Semantik die Formeln der logischen Form prinzipiell faktenorientiert aufteilt, und damit diese Art von Problematik umgeht.

### Induktive Definitionen

Alg. 1 kann so charakterisiert werden, daß er als eine Funktion definiert wird, welche auf dem Verband der Herbrandinterpretationen Anwendung findet.

Diese Anschauungsweise ermöglicht eine solide mathematische Bearbeitung der Eigenschaften dieses Algorithmus. Sie impliziert die Verwendung der bekannten Rekursionstheorieresultate von Alfred Tarski (Tarski, Alfed: A lattice-theoretical Fixpoint Theorem and its Applications, Pacific J. Math. 5, S- 285-309, 1955).

Die folgenden Definitionen und Proposition (4) dienen dazu, Alg. 1 mit Hilfe der Rekursionstheorie darzustellen (vgl. Minker, J.: Foundations of deductive databases logic programming, Washington 1986, Morgan Kaufmann Pub., 1988, [Van Emden 1976], und Llyod: Foundations of logic programming, Second extended edition, Springer, 1993).
*Def. 19: Eine Relation R definiert auf der Menge S* ist *eine Teilmenge von SXS. Sie wird Halbordnung genannt (≤geschrieben),* wenn:
*1) xRx, für alle x aus S.*
*2) xRy und yRx impliziert x=y für alle x,y aus S.*
*3) xRy und yRz impliziert. xRz für alle x,y,z aus S.*
*Def. 20: Sei S eine Halbordnung, dann wird a aus S obere Schranke einer Teilmenge X genannt, wenn für alle x aus X gilt: x≤a. Die Definition von unteren Schranken ist analog.*
*Def*. *21: Das Element a aus S (Halbordnung) wird kleinste obere Schranke einer Teilmenge X genannt (geschrieben lub(X)), wenn für jede obere Schranke x aus X gilt: a≤x. Die Definition von gib(X) ist analog.*
*Def*. *22: Eine Halbordnung S ist ein vollständiger Verband, wenn lub(X) und glb(X) für jede Teilmenge X von S existieren. Gib(S) wird "bottom-element" und lub(S) wird "top-element" genannt.*
*Def. 23: Sei S ein vollständiger Verband. Wenn eine Funktion T : S*-> *S*. *wie folgt definiert ist.*
*1) Für alle x,y. so daß x≤y gilt T(x)≤T(y).*
*2) T(lub(X))=lub(T(X)) für jede gerichtete Teilmenge X von S, dann wird T monoton (1) und stetig (2) genannt.*
*Proposition 4: Der Verband aller Herbrandinterpretationen* 2 ^{*B*_{*p*}} *eines definiten und endlichen logischen Programmes P ist ein vollständiger Verband.*
*Beweis:*
*Die Mengeninklusionsrelation zwischen Herbrandinterpretationen (⊂), definiert eine kanonische Halbordnung. Wenn man darüber hinaus jeder Teilmenge X dieser Herbrandinterpretationen einen lub(X), das mit der Union und einen glb(X). welches wiederum mit der Schnittmenge aller in der Teilmenge vorkommenden Interpretationen identisch ist. zuweist, dann erhält man einen vollständigen Verband. In dem Verband ist die leere Menge "Bottom-element" und B*_{*p*} *"Top-element"*.

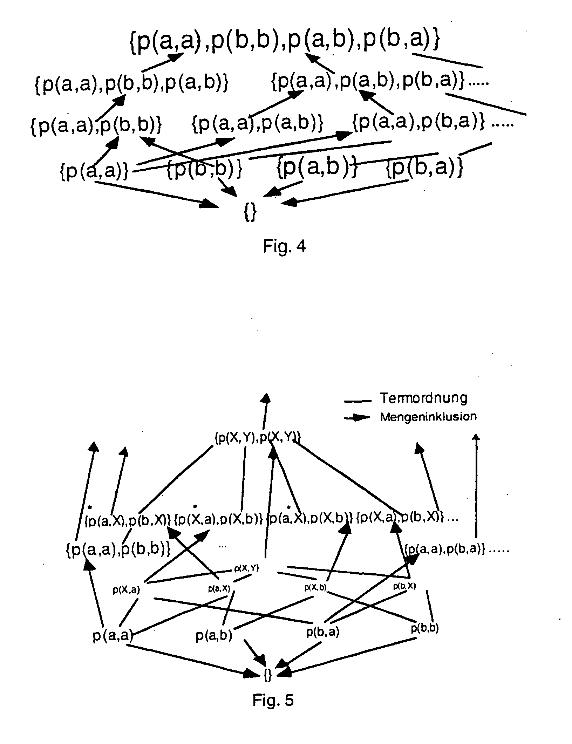

Hat man beispielsweise das folgende definite Programm: 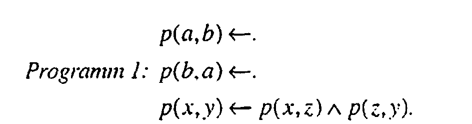 so ist sein Herbrandinterpretationenverband wie in Fig. 4.

Eines der wichtigsten praktischen Resultate der Rekursionstheorieliefert folgendes Theorem:
*Theorem [Tarski 1955]: Sei S ein vollständiger Verband und T:S->S eine stetige Funktion, dann hat T einen kleinsten Fixpunkt lfp(T) und einen größten Fixpunkt gfp(T), so daß:*
*lfp(T)=glb{x:T(x)=x}=glb(x:T(x)≤x} und gfp(T)=lub(x:T(x)=x}=lub{x:x≤T(x)}*

Die Gleichheit zwischen Fixpunkten einer monotonen Funktion und den unteren und oberen Schranken des Verbandes bedeutet hier, *daß man in konstruktiver Weise in der Lage ist,* diese *Schranken zu berechnen, wenn der dafür benutzte Algorithmus garantiert terminiert.* Dies bedeutet weiterhin, daß wenn Alg. 1 in Form einer monotonen Funktion vorliegt. es eine Garantie dafür gibt, daß die Fixpunkte den intendierten *vollständigen Herbrandinterpretationen* entsprechen. In der Tat ist Alg. 1 in folgender Weise auszudrücken [vgl. Lloyd 1993]:
*Def*. *24: Sei P ein definites Programm. Die Funktion T*_{*p*}:2^{*B*_{*p*}} → 2^{*B*_{*p*}} *ist wie folgt definiert: Sei I eine Herbrandinterpretation, dann gilt:*
*T*_{*p*}*(I) =* {*A* ∈ *B*_{*p*}*:A ← A*₁ ∧ *A*₂∧...*A*_{*n*}}, *wo A ← A*₁ ∧ *A*₂∧...*A*_{*n*}. *eine Grundinstanz. einer Regel in P ist, und* {*A*₁∧ *A*₂∧...*A*_{*n*}} *⊆ I*.
*Proposition 5: Alg. 1 ist äquivalent zu T*_{*p*}*.*
Beweis
*Folgt aus der Definition* 24 *und Alg. 1.*
*Proposition 6: T*_{*p*} *definiert eine stetige (und monotone) Funktion auf dem Verband der Herbrandinterpretationen. Desweiteren ist das minimale Herbrandmodell M*_{*p*}*=lfp(T*_{*p*}*).*
*Beweis*
*siehe [Lloyd 1993] Theorem 6.5*

Hier ist es angezeigt, den *praktischen* Unterschied zwischen Alg. 1 und der üblichen beweisbasierten Ansätze detaillierter zu schildern. Hierzu wird als Repräsentant der beweisbasierten Ansätze die Sprache PROLOG in ihrer klassischen Implementation angewandt:

Das Inferenzprinzip von PROLOG beruht auf SLD-Resolution, einer Prozedur, die auf Robinsons Resolutionsprinzip für prädikatenlogische Klauseln basiert (vgl. [Sterling 1986]). Es werden Anfragen an die Wissensbasis gestellt, und grundsätzlich durch ein backward-chaining-Verfahren abgearbeitet. Ein PROLOG-Programm besteht aus einer Menge von Klauseln {A<---B₁,B₂,...Bₙ}, welche jeweils als Prozedurdefinitionen betrachtet werden können. Ziel-Klauseln haben die Form {<---C₁,C₂,...Cₖ}, wobei jedes Cᵢ als Prozeduraufruf angesehen wird.

Die SLD-Resolution beginnt mit dem initialen Ziel und versucht, einen Widerspruch zu den vorhandenen Fakten oder Regeln zu erzeugen, indem die leere Klausel (NIL) abgeleitet wird (SLD-refutation). Wenn {<---C₁,C₂,...Cₖ} die aktuelle Zielklausel ist, dann wird in einem Ableitungsschritt ein Cj mit dem Kopf A einer Regel {A<---B ₁,B₂,...Bₙ} unifiziert (siehe obige Definition). Man erreicht dadurch die neue Zielklausel Π({<---C₁,..Cⱼ₋₁,B₁,B₂,...Bₙ,Cⱼ₊₁,...Cₖ}), wo Π eine spezielle Variablenauswertung ist (Substitution genannt).

Die Auswahl eines Literales aus einem Ziel ist beliebig. Existierende Systeme (sogenannte STANDARD-PROLOG-Systeme) wählen jeweils das am weitesten links stehende Literal einer Zielklausel als Kandidat für den nächsten anstehenden Unifikationsschritt aus (die sogenannte Tiefsuche, engl.: depth-First search).

Zudem ist die Reihenfolge der Klauseln eines Programmes maßgebend für seine Bearbeitung, d.h., daß die erste Klausel des Programmes immer Vorrang hat.

Diese beiden Strategien von STANDARD-PROLOG-Systemen haben zur Folge, daß endlose Schleifen nicht ohne externe Maßnahmen aufhebbar sind. Vor allem kann im Falle von rekursiven Klauseln die strikte Befolgung der Klauselordnung dazu führen, daß dieselbe Reihenfolge endlos gehalten wird. Falls ein Beweis schneller durch ein Vergleich *in der Breite* auffindbar wäre. würde hiermit unnötiger Aufwand betrieben.

Außer den oben erwähnten Problemen mit der Beweissuche, existieren andere Effizienznachteile prinzipieller Natur:

Die Komplexität ist nicht nur von der Anzahl der Fakten n einer Datenbasis abhängig, sondern auch von dem Inhalt der logischen Form.

Es konnte bereits gezeigt werden, daß man beispielsweise für die Kalkulation der transitiven Hülle einer Relation R, O(n), O(n*log n) oder einfach O(1) Iterationsschritte benötigt, je nachdem ob der Relationsgraph eine Kette (mit n Kanten), ein binärer Baum oder ein Baum der Tiefe 1 ist (d.h. eine Wurzel und n Tochterkanten).

Soll die Deduktion effizient bleiben, kann sie folglich nicht einheitlich behandelt werden, es sei denn, man überließe dem kompetenten Benutzer die Wahl, ob und inwiefern er den Prozeß optimiert (vgl. Schmidt: Meta-level control for deductive database systems, Lecture notes in Computer science. Springer Verlag, 1991). Wenn hingegen Alg. 1 betrachtet wird, findet man folgende wichtige Unterschiede zu den oben erwähnten Verfahrensweisen:
A. Der Aufwand, die logische Theorie zu konstruieren, geschieht nur einmal. Man könnte dann von einer kompilierten Theorie sprechen, und braucht für die Abfragebearbeitung keine Inferenzkomponente mehr.
B. Im Gegensatz zu PROLOG-Verfahren, ist Alg. 1 von Anfang an für *endliche,* definite Mengen von Klauseln geeignet. Dies macht Suchstrategien und Klauselordnungen überflüssig, da man in jedem Falle alle möglichen Instanzen der Regeln untersuchen muß.
C. Zwar bleibt die Komplexität abhängig von der logischen Form. doch ist die Möglichkeit einer einheitlichen Behandlung dieses Problems unabhängig vom menschlichen Experten gegeben.

Dies ist so, weil im Unterschied zu PROLOG-Verfahren, welche die Vervollständigung als Suchprozedur benutzen, die Vervollständigung als Generierungsverfahren behandelt wird.

Die hier definierte Herbrandabstraktionsstruktur (eine Abstraktion des konventionellen Herbrandinterpretationenverbandes) wird wie folgt eingeführt:

Proposilion 7 beweist, daß diese Struktur die Eigenschaften eines Verbandes hat. Damit erlaubt sie viele Eigenschaften des Herbrandinterpretationenverbandes zu übernehmen, wie die folgenden Propositionen zeigen werden. Die Relevanz dieser neudefinierten Struktur wird erst in den Propositionen 12 und 13 deutlich. Diese besagen, daß die exponentielle Natur der Komplexität der Vervollständigung durch das Einführen dieser Struktur gemindert wurde.

Das entwickelte induktive Verfahren (formalisiert in Alg. 2) hat eine gewisse Ähnlichkeit zur Magic-Sets Methode. Der Unterschied besteht aber darin, daß die Magic-sets Methode in einer abfrageorientierten Weise die Variablenbindungen bestimmt, die den Aufwand der Klauselanwendung(en) reduzieren. Damit beschränkt sie sich nur auf einen Teil des möglichen Ableitungsuniversums.

Erfindungsgemäß ist man dagegen daran interessiert, alle möglichen Extensionen aller Relationen zu generieren, da das deduktive Katalogsystem (DKS) im Gegensatz zu einer offenen Daten- oder Wissensbankanwendung, ein abgeschlossenes logisches Modell darstellt. Die deklarative DKS-Sprache besitzt also dieselben Syntaxvorschriften wie DATALOG-artige Sprachen, eine aber durch Alg. 2 dargestellte, induktive Fixpunktsemantik, so daß das vorgeschlagene Verfahren (formalisiert in Alg. 2) die oben beschriebenen Engpässe nicht mehr besitzt.

Die wichtigsten Einwände gegen Alg. 1 waren die unnötigen Wiederholungen von Deduktionsschritten und die Ineffizienz bei der Bildung von Musterschnittmengen.

In diesem Abschnitt wird eine verfahrenstechnische Änderung von Alg. 1 vorgenommen, die vor allem das zweite Problem löst.

Bevor die praktischen Aspekte dieser Änderung erörtert werden, muß man aber zeigen, daß sie die obige Form des induktiven Vervollständigungsverfahrens nicht verletzt. Hierzu benötigt man zwei Propositionen und neue Definitionen:
*Def. 25: Sei t ein Grundatom aus der Atomenmenge A und t ∈ B*_{*p*} *eines logischen Programmes. Die Funktion abst:A →* 2^{*A*}, *genannt die Abstraktion des Atoms t, ist die Menge aller Atome a, so daß:*
*1) a geht aus t hervor, indem man Grundterme in t durch Variablen ersetzt.*
*2) a hat gleich viele Variablen wie t oder mehr.*

### Beispielsweise ist abst(p(a,b))={p(a,b),p(x,b),p(a,X),p(X,Y)}.

Die Termabstraktionsfunktion generiert eine kanonische Ordnung (*Unifikationsordrung* µ genannt) auf den Termen von Up. Es ist leicht zu zeigen, daß man diese Ordnung zu einem Verband (dem *Termverband*) erweitern kann. Dieser ist umfassender als das Herbranduniversum, da es nicht nur variablenfreie Terme enthält. Jede obere Schranke einer Teilmenge ist ein allgemeiner Term dieser Teilmenge. Untere Schranken sind hingegen immer Terme, die am meisten instanziert sind. Untere und obere Schranken sind minimal. Im Beispiel ist p(a,b) die untere, und p(X,Y) die obere Schranke der Menge ahst(p(a,b)).
*Def. 26: Sei M eine Menge von Grundatomen. Die Abstraktion* von *M abst*^{*M*}: *2*^{*A*} → 2 ^{*2*}^{^{*A*}} *ist eine Funktion. die jeder Menge eine Hierarchie von Atommengen zuweist: Jedes Niveau n dieser Hierarchie enthält Terme mit n Variablen.*
Fig. 5 zeigt einige Abstraktionen von {p(a,a)} und {p(a,a),p(b,b)}.
*Def. 27: Sei V der Herbrandinterpretationenverband eines logischen Programmes. Wenn man jeder Grundatommenge eines Verbandpunktes in V ihre Abstraktion abst*^{*M*} *zuweist, dann wird die so erhaltene Struktur Herbrandabstraktionsstruktur genannt. Man spricht nicht mehr von gewöhnlichen, sondern von abstrakten Herbrandinterpretationen.*

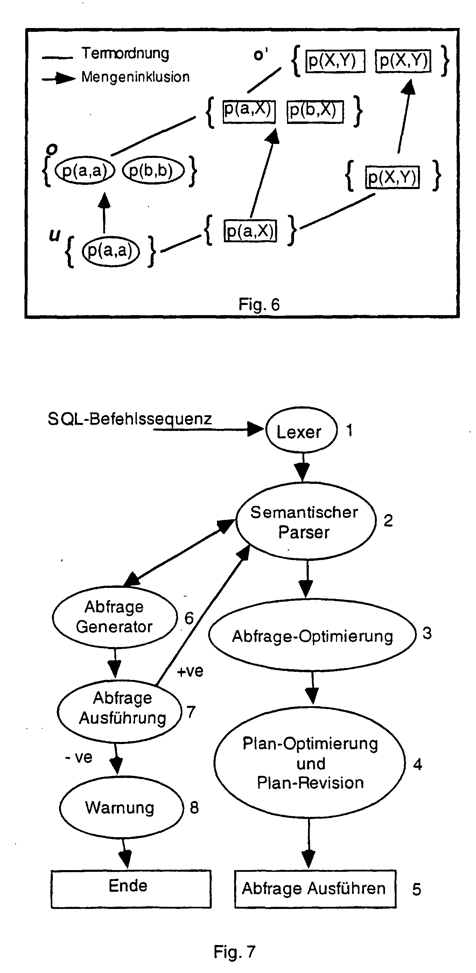

Fig. 6 zeigt einen Teil der Herbrandabstraktionsstruktur für Programm 1.
*Proposition 7: Die Herbrandabstraktionsstruktur eines logischen Programmes P ist ein vollständiger Verband (genannt Herbrandabstraktionsverband).*
*Beweis:*
*Die Funktion abst*^{*M*} *erteilt jedem Punkt des Herbrandinterpretationsverbandes die Hierarchie der Abstraktionen seiner Atome. Insbesondere tut sie das für obere und untere Schranken. Es entsteht eine Anzahl von neuen Verbandspunkten* (vgl. z.B. *-Punkte in Fig. 5). *Diese besitzen jedoch die Eigenschaft, daß sie bezüglich der µ-Relation genau eine obere Schranke besitzen. Nimmt man jede dieser µ-Schranken als neue obere Schranke der jeweiligen Teilmenge* (in Fig. 6 ist es der Punkt o'), *so wird die relevante Verbandseigenschaft bewahrt, nämlich daß lub(X) und glb(X) für jede Teilmenge X existiert und minimal ist. Die unteren Schranken bleiben hierbei die alten Grundatommengen. War eine untere Schranke u mit einem weiteren darüber liegenden Punkt o des alten Verbandes gekoppelt, so besteht diese Kopplung weiterhin. Allerdings schlägt man jetzt über die Abstraktionen der beiden Punkte neue Wege von u nach o ein* (vgl. Fig. 6).

Die Herbrandabstraktionsstruktur wurde gewählt, um ein verallgemeinertes Verfahren der Funktion Tp erreichen zu können. Dazu dient folgende Definition:
*Def. 28: Sei P ein definites Programm. Die Funktion T*_{*p*}*'* :2^{*A*} → 2 *ist wie folgt definiert: Sei I eine abstrakte Herbrandinterpretation (siehe unten), dann gilt: T*_{*p*}*'*(*I*) *=* {*R* ∈ *A*: *R* ← *A*₁∧*A*₂∧...*A*_{*n*}} *wo R* ← *A*₁ ∧ *A*₂∧...*A*_{*n*}. *eine Instanz einer Regel in P ist (nicht unbedingt Grundinstanz) und* {*A*₁∧ *A*₂∧...*A*_{*n*}} ⊆ *I*.

Es ist leicht einzusehen, daß Tₚ' monoton und stetig ist. Der Beweis basiert auf abstrakten Interpretationen:
*Def.* 29: *Sei L ein vollständiger Verband und X Teilmenge von L. X ist gerichtet. gdw. für jede endliche Teilmenge von X eine obere Schranke o existiert, und o* ∈ *X.*
*Proposition 8: Die oben definierte Funktion T*_{*p*}*' ist stetig.*
*Beweis:* *Sei X eine gerichtete Teilmenge von* 2^{*A*}. *Es muß gezeigt werden, daß*
*T*_{*p*}*'* (lub(*X*)) = lub(*T*_{*p*}' (X)). *Hierzu ist einzusehen, daß*
{*A*₁,...,*A*ₙ} ⊆ lub(*X*)*gdw*.{*A*₁,...,*A*ₙ} ⊆ *I,I ∈ X*, *da X gerichtet ist. Wir haben dann A* ∈ *T*_{*p*}*'(lub(X)) gdw A<--A*_{*1*}*,...,A*_{*n*}*. Instanz einer Klausel in P und {A*_{*1*},...,*A*_{*n*}*.} ⊆ lub(X) gdw. A<--A*_{*1*},...,*A*_{*n*}*. Instanz einer Klausel in P und {A*_{*1*},...,*A*_{*n*}*.}* ⊆ *1 für ein I ∈ X gdw. A* ⊆ *T*_{*p*} *'(I), für ein I ∈X gdw. A* ⊆ *lub(T*_{*p*}*(X)).*

Um zu zeigen. daß das minimale, abstrakte Herbrandmodell von P mit dem lfp(Tₚ') übereinstimmt, muß man den Begriff eines abstrakten Herbrandmodell näher definieren. Dann ist die Äquivalenz zwischen einem normalen Herbrandmodell und die Menge aller seiner Abstraktionen zu zeigen.
*Def. 30: Eine n-äre Variablenauswertung* Π_{*n*} *ist eine Abbildung, die nur n Variablen einer Formel ein Element aus dem Domain D zuschreibt. Die übrigen Variablen läßt sie uninstanziert. Herbrandinterpretationen, die n-äre Variablenauswertungen zulassen, werden abstrakte Herbrandinterpretationen genannt.*
*Def. 31: Eine abstrakte Herbrandinterpretation I wird abstraktes n-äres Herbrandmodell eines logischen Programmes P genannt, wenn*
*1) Für alle Tupel (tl*....*tj), die in der Relation P vorkommen alle n-äre Abstraktionen von P(t1*...*tj) (Muster ) den Wahrheitswert "True" haben.*
*2) Für alle Regeln und alle Variablenauswertungen Π*_{*n*} *gilt, daß wo immer* πₙ(*A*1∧...*An*) *"True" ist*, *die Konkitision auch den Wahrheitswert "True*" *besitzt.*
*Proposition 9: Sei P ein definites logisches Programm mit Klauseln, die höchstens n-äre Prädikate enthalten. Eine Interpretation I ist Herbrandmodellvon P gdw.* ∀*m*,0 < *m* <= *n*, ∀*I*' ∈ *abst*^{*M*} (*I*),*I*' *gehört zum m-ten Hierarchieniveau, I' ist abstraktes m-äres Herbrandmodell für P.*
*Beweis:*
*Es ist leicht zu sehen, daß man jede Grundinstanz R ←* A₁∧ *A*₂*∧...A*_{*n*}*, einer Klausel solange abstrahieren kann, bis alle instanzierten Tenne durch Variablen ersetzt werden. Diese verschiedene Abstraktionen abst*(*R*) ← *abst*(*A*₁) ∧ *abst*(*A*₂)∧...*abst*(*A*_{*n*}) *erfüllen jeweils* ({*abt*(*A*₁) ∧ *abst*(*A*₂)*∧*...abst(*A*_{*n*})} *⊆ I'*) → *abst*(*R*) ∈ *I' für I' vom m-ten Niveau, da I Modell ist und damit R ∈ I*, *d.h. auch abst*(*R*) *∈ I' laut der Definition von abst*^{*M*}*.*

### Resultate:

*Proposition 10: Sei I Herbrandinterpretation des logischen, definiten Programmes P mit höchstens n-äre Prädikate. Dann gilt: I ist Modell für P gdw. ∀l' ∈ abst*^{*M*} (*I*):*T*_{*p*}' (*I*') ⊆ *Γ', wo I' ein m-äres abstraktes Herbrandmodell ist.*
*Beweis:*
*Sei I eine Herbrandinterpretation von P. Dann ist I Modell von P gdw.* ∀_{*m*},0 < *m* <= *n, ∀*Γ ∈ *abst* ^{*M*} *(I) ,I' gehört zum m-ten Hierarchieniveau, I*' *ist abstraktes m-äres Herbrandmodell für P (laut Proposition 9) gdw.* ({*abt*(*A*₁) *∧ abst*(*A*2)∧...abst(*A*ₙ)} *⊆ I') → abst*(*R*) *∈ I*' *für jede Regelinstanz abst*(*R*) ← *abs*t(*A*₁) ∧ *abst*(*A*₂)∧...*abst*(*A*_{*n*}) gdw Tₚ' (*I'*) ⊆ I' laut der Definition von Tₚ'.
*Proposition 11: (Fixpunkte durch Abstraktionen) Sei P ein definites Programm mit höchstens n-ären Prädikaten. Das minimale Herbrandmodell M*_{*p*}*=lfp(T*_{*p*}*'*)*.*
*Beweis:*
*(siehe [Lloyd 1993], Beweis von Theorem 6.5) M*_{*p*} *=glb{I: I ist ein Herbrandmodell für P}=glb{I':I' ist ein m-äres abstraktes Herbrandmodell, I' ∈bast*^{*M*} (*I*) *,m<=n, T*_{*p*}*'*(*I'*) *⊆ Γ'* }*} =lfp(T*_{*p*}*').*

Die obige Funktion Tₚ' unterscheidet sich von Tp vom letzten Abschnitt in der Eigenschaft, ein alternatives Verfahren zu beschreiben, wie man von der Standard-Herbrandinterpretation zu einer "vollständigen" gelangen kann. Dieses Verfahren erlaubt ein beliebigen Abstraktionsgrad. Kehrt man den "Abstraktionsprozeß" um, d.h. fängt man mit den uninstanzierten Klauseln von P an, so beschreibt Tₚ' einen Verfahren, daß die Klauseln in einer Menge "instanzierterer" Klauseln aufteilen kann. Dies führt zu dem in Alg. 2 beschriebenen Verfahren.

Der Unterschied zwischen Alg. 1 und des hier vorgeschlagenen Verfahrens ist der. daß man jetzt eine größere Menge Regeln hat, die "instanzierter" sind als zuvor. Der Effekt dieser Instanzierung wird in der folgenden Proposition deutlich. 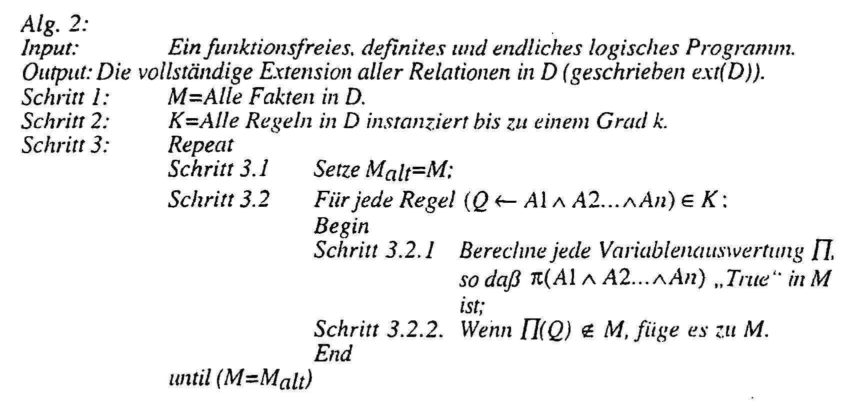 *Proposition 12: Angenommen jedes Muster M einer durchschnittlichen Regel Q* ← *A*1∧ *A*2...∧*An unifiziert m Fakten von ext(D) (im Durchschnitt), dann ist der Aufwand von Alg.* 2 *im schlechtesten Falle O((m*/*k)*^{*n*}**k), k* ist *der Instanzierungsgrad der Regeln von P.*
*Beweis:*
*Da die Anzahl der Fakten pro Muster durch die Instanzierung von m auf m*/*K gesunken ist, benötigt die Berechnung aller Variablenauswertungen Π in Schritt 3.2.1. jetzt nicht mehr c*m*^{*n*}*, sondern nur noch c*(m*/*k)* ^{*n*}**k.*

Auch der Engpaß von Schritt 3.2.2. ist gelöst, da man eine sequentielle Suche jedes Faktums nicht mehr wiederholt starten muß, sondern die Position jedes Faktums eindeutig durch die Termhierarchie bestimmen ist. Die dadurch gewonnene Effizienz läßt sich folgender Weise ausdrücken:
*Proposition 13: Sei* M *Muster mit Instanzierungsgrad k. Der Aufwand ein Faktum in M zu suchen beträgt höchstens O(k) Unifikationen.*
*Beweis:*
*Angenommen M enthält das Faktum nicht, dann sind <=k Unifikationen nötig, um das herauszufinden, da jedes Muster (und Untermuster) per definitionem dem Faktum strukturell ähneln muß. Im umgekehrten Falle benötigt man genau k Untersuchungen, da M k Untermuster hat.*

Der Unterschied zwischen den Verfahren Alg. 1 und Alg. 2 ist folglich der, daß Alg. 1 für die Vervollständigung einer Faktenmenge (einer symmetrischen und transitiven Form. die ungefähr das zehnfache der Information generierte) auf einer RS6000 Maschine eine Stunde und 30 Minuten, brauchte. Das Verfahren in Alg. 2 (mit k=30) brauchte hingegen nur 20 Minuten.

Bei geringerem k konnte man eine lineare Steigerung beobachten.

Das in Alg. 2 formalisierte Verfahren schreibt nicht vor, wie man die Instanzierung der Regeln optimal vornehmen sollte. Diese können in einer Herbrandabstraktionenstruktur mit einer Vielfalt von Möglichkeiten erreicht werden. Das im folgenden beschriebene Verfahren dient dazu, die Instanzierungen an den in den Begriffsbäumen des Kataloges sich befindlichen Termen anzubinden, um damit eine geeignetes Verfahren zum Einsatz der Regeln für den Zweck der Constraintsbehandlung zu liefern.

*Verfahren 1:*
- *Schritt 1:*: *Schreibe alle Begriffe und ihre Beziehungen in Form von Datalog-Fakten explizit auf (diese Faktenbasis wird Δ genannt).*
- *Schritt 2:*: *Schreibe alle logischen Constraints-Regeln in Form von Datalog-Programmen auf.*
- *Schritt 3:*: *Für jeden Begriff(f) aus der in Schritt 1 gewonnenen Hierarchie, instanziere alle in B aufgelisteten logischen Regeln in folgender Weise:*
*Ersetze jede in einem Rumpf einer Regel mindestens zweimal vorkommende Variable (PIVOT*-*Variable genannt) durch den Begriff (f)*. *Jede Instanzierung liefert eine neue Regel. Wenn ein Rumpf keine Verknüpfungen besitzt, dann instanziere jede freie Variable mit (f).*
- *Schritt 4 :*: *Wende Alg. 2 auf die so gewonnene Regelmenge und die Faktenbasis Δ an.*

Als Beispiel für die Ausführung dieses Verfahrens dient folgendes Programm:
*p*(*X,Y*) ← *p*(*X,Y*)*,p*(*Y,Z*).
*p*(*X,Y*) ← *p(Y,X).*
Δ={p(e,f),p(f,g),p(g,h)}
Für den Begriff (f) hat man folgende Regelmenge:
*p*(*X*, *Y*) *← p*(*X,f*)*,p*(*f,Z*).
*p*(*X,f*) ← *p*(*f*,*X*).
*p*(*f*,*Y*) *← p*(*X*,*f*).

Sei m=16 (maximale Anzahl von möglichen Grundtermkombinationen), dann ist in diesem Falle m/k=4. d.h. k=4. Man benötigt höchstens 16*4=64 Operationen. Normalerweise jedoch, liegt k im Verlauf einer Realisierung von Alg. 2 zwischen den Werten 1 und 4, so daß m/k=2 (mittelwertig), d.h., daß maximal 32 Operationen benötigt werden. Eine günstige Magic-sets Realisierung würde dagegen 38 Operationen (n m log m) brauchen.

### Constraintsbehandlung

Nachdem durch Verfahren 1 die für eine Anwendung notwendige Begriffshierarchie in ihrer vollständigen Extension generiert wird, ist die Constraintsbehandlung einfach zu handhaben. Die im Katalog abgespeicherten Daten dienen dazu, Antworten auf alle in Form von Datalog-Fakten gestellten Anfragen zu liefern.

Die Geschwindigkeit der Antwortsprozedur ist damit vom benutzten Suchverfahren und nicht von der Komplexität der logischen Form abhängig.

Eine Begriffsmenge von z.B. 50.000 Wörtern, die durch die Vervollständigung auf das Hundertfache vergrößert wird, würde 5 Mega Zeichenketten Speicher benötigen.

Ein Index-basiertes Suchverfahren (z.B. eine binäre Suche) würde normalerweise O(7) Operationen für die Suche einer einzigen Zeichenkette brauchen.

Das hier erfundene Verfahren generiert aus den Einträgen in Felder eines Datensatzes Grundfakten, und stellt sie als Anfragen an das DKS nach dem üblichen Datensatz-Commit Befehl. Angenommen die Datenbankstruktur besitzt n Felder, dann sind n-1 Anfragen für einen vollständigen Konsistenzcheck nötig.

### Fig. 7 zeigt das hier vorgeschlagene Verfahren einer SQL-Klauselbearbeitung:

Die in Punkt (6) zusammengestellten Anfragen werden in (7) verifiziert. Falls das Resultat der Suche positiv war, läuft die Befehlssequenz wie üblich weiter. Ansonsten wird eine Systemwarnung (8) erfolgen. Die Begriffskombination ist in diesem Falle ungültig. Beispielsweise würde in der obigen Druckmaschinendatenbank bei einer Dateneingabe (Typ="Polar" und Gruppe="5-Farben") der Abfragengenerator das Faktum "hat_gruppe(polar,5-Farben)" zusammenstellen. Dieser erweist sich als nicht existent und schaltet den Warnprozeß in (8) ein.

## Patentansprüche

1. Verfahren eines deduktiven Kataloges zur allgemeinen Constraintsbehandlung im erweiterten relationalen Datenbankkonzept, **dadurch gekennzeichnet, daß** ein konventioneller RDS-Katalog als deduktive Datenbank herangezogen wird, in welchem alle für die Constraintsbehandlung relevanten Fakten in ihrer vollständigen Extension, "bottom-up" generiert im Voraus zur Verfügung gestellt werden.

2. Verfahren nach Anspruch 1, **dadurch gekennzeichnet, daß** eine Datalog-artige logische Sprache mit einer neuen Fixpunktsemantik eingeführt wird.

3. Verfahren nach Anspruch 1, **dadurch gekennzeichnet, daß** die Constraintskontrolle durch den Abfragegenerator die im Katalog abgespeicherten Daten dazu benutzt, Antworten auf alle in Form von Datalog-Fakten gestellten Anfragen zu liefern.

4. Verfahren nach Anspruch 2, **dadurch gekennzeichnet, daß** die Fixpunktsemantik die Variablen als abstrakte Objekte des Domains impliziert (Herbrandabstraktionsstruktur, Alg. 2).

5. Verfahren nach Anspruch 2, **dadurch gekennzeichnet. daß** die Instanzierungen der Formeln eines logischen Programmes an den in den Begriffsbäumen des Kataloges sich befindlichen Termen angebunden werden, und die Klauseln dadurch optimiert, daß eine Menge instanzierterer Klauseln abstrahiert wird (Verfahren 1).

## Claims

1. Method of a deductive catalogue for general constraints verification in the extended relational database-concept wherein a conventional RD-catalogue is used as a deductive database in which all relevant facts important for constraints verification are generated in their full extension "bottom up" and are put at disposal beforehand (i.e., before any verification takes place).

2. Method according to claim **1** wherein a new datalog-like language consisting of a new fixpoint-semantic is introduced.

3. Method according to claim **2** wherein the constraints-control via the query-generation uses data stored in the catalogue for generating answers to queries formulated in Datalog-like facts.

4. Method according to claim **2** wherein the new fixpoint-semantic contains variables as abstract objects of the domain (Herbrand-abstraction-structure, Alg.2.)

5. Method according to claim **2** wherein the instanciations of the formulas of a logic program are coupled to the terms residing in the term-hierarchies of the catalogue, thus optimizing clauses by generating sets of more instanciated clauses (Method 1).

## Revendications

1. Procédure d'un catalogue déductif pour un traitement général des contraintes dans un concept de base de donnée relationnelle élargie, **caractérisé en ce qu'**un catalogue RDS conventionnel est perçu comme une base de donnée déductive, dans laquelle tous les paramètres relevants pour le traitement des contraintes, dans leur extension complète "bottom up", sont généré et mis en disposition à l'avance.

2. Procédure selon la revendication 1, **caractérisé en ce qu**'un nouveau langage à base de sémantique de point fixe à caractère "Datalog", est introduit.

3. Procédure selon la revendication 2, **caractérisé en ce que** le contrôle de contraintes se transforme par le biais d'un générateur de requêtes, en utilisant les données stockées dans le catalogue, livrant les réponses à toutes les requêtes sous forme de paramètres Datalog.

4. Procédure selon la revendication 2, **caractérisé en ce que** la sémantique de point fixe implicite les variables comme étant des objets abstraits d'un domaine (Structure d'abstraction de "Herbrand", Alg. 2)

5. Procédure selon la revendication 2, **caractérisé en ce qu** e les instanciations des formules d'un programme logique soient connectées aux "termes" incluses au niveau de l'arborescence terminologique du catalogue, et que les clauses soient de la façon optimisées, résultant de l'abstraction d'une partie des clauses instanciées (Procédure 1).
